# EUROPÄISCHE PATENTSCHRIFT

(11) **EP 3 007 961 B1**
(45) Veröffentlichungstag und Bekanntmachung des Hinweises auf die Patenterteilung: **21.03.2018**
(21) Anmeldenummer: 14734011.1
(22) Anmeldetag: 06.06.2014
(51) Int. Cl.: B62D 25/08, B60J 5/10, B62D 21/08

(54) **FAHRZEUGKAROSSERIE UND VERFAHREN ZUR HERSTELLUNG DER FAHRZEUGKAROSSERIE**
VEHICLE BODY AND METHOD FOR PRODUCING THE VEHICLE BODY
CARROSSERIE DE VÉHICULE ET PROCÉDÉ DE FABRICATION DE LA CARROSSERIE DE VÉHICULE

(30) Priorität: 13.06.2013 DE 102013211076
(43) Veröffentlichungstag der Anmeldung: 20.04.2016
(73) Patentinhaber: Bayerische Motoren Werke Aktiengesellschaft, 80809 München (DE)
(72) Erfinder: STEIN, Michael, 85244 Roehrmoos (DE)
(86) Internationale Anmeldenummer: PCT/EP2014/061777
(87) Internationale Veröffentlichungsnummer: WO 2014/198646

(56) Entgegenhaltungen:
- EP-A2- 2 399 805
- WO-A2-2014/063687
- DE-A1- 10 109 724
- JP-A- 2006 137 353

## Beschreibung

Vorliegende Erfindung betrifft eine Fahrzeugkarosserie in Schalenbauweise und ein Verfahren zur Herstellung der Fahrzeugkarosserie.

Der Stand der Technik kennt unterschiedliche selbsttragende Fahrzeugkarosserien in Schalenbauweise (auch: Blechschalenbauweise). Charakteristisch für die Schalenbauweise ist, dass die unterschiedlichen Bestandteile der Karosserie, wie beispielsweise der Dachrahmen, die einzelnen Säulen oder die Schweller, jeweils aus einer Oberschale und einer Unterschale zusammengesetzt sind. Die zusammengesetzten Ober- und Unterschalen bilden dabei ein geschlossenes Profil mit einem Hohlraum. Die Ober- und Unterschalen werden auch als Außen- und Innenschalen bezeichnet.

Aus der JP 2006 137353 A ist eine Fahrzeugkarosserie in Schalenbauweise bekannt, mit einem Heckrahmen, der sich aus einer Innenschale und einer Außenschale zusammensetzt. Der Querschnitt des Heckrahmens variiert in Fahrzeugquerrichtung. Die Innenschale des Heckrahmens ist einteilig ausgebildet und besteht aus einem Material mit gleichmäßiger Dicke.

Es ist Aufgabe vorliegender Erfindung, eine Fahrzeugkarosserie in Schalenbauweise anzugeben, die bei kostengünstiger Herstellung und Montage betriebssicher, dauerfest und leichtbauend ist. Des Weiteren ist es Aufgabe vorliegender Erfindung, ein entsprechendes Verfahren zur Herstellung der Fahrzeugkarosserie anzugeben.

Die Lösung der Aufgabe erfolgt durch die Merkmale der unabhängigen Ansprüche. Die abhängigen Ansprüche haben jeweils vorteilhafte Ausgestaltungen der Erfindung zum Gegenstand.

Somit wird die Erfindung gelöst durch eine Fahrzeugkarosserie in Schalenbauweise. Die Fahrzeugkarosserie umfasst einen sich in Fahrzeugquerrichtung erstreckenden Heckrahmen. Der Heckrahmen erstreckt sich hinten quer über die Fahrzeugbreite, beispielsweise zwischen den Längsträgern oder zwischen den hinteren Säulen (C-Säulen). Im Heckrahmen ist üblicherweise ein Schlossgegenstück integriert. In diesem Schlossgegenstück rastet das Schloss der Heckklappe ein. Des Weiteren dient der Heckrahmen üblicherweise zur Anbindung des hinteren Stoßfängers. Der Heckrahmen ist zusammengesetzt aus einer sogenannten Stütze-Heckverkleidung und einer Heckverkleidung. Die Stütze-Heckverkleidung ist als eine Innenschale, die Heckverkleidung als eine Außenschale ausgebildet. Die Innen- und Außenschale bilden, wie üblich in der Schalenbauweise für Fahrzeugkarosserien, ein geschlossenes, hohles Profil.

Erfindungsgemäß ist vorgesehen, dass die Stütze-Heckverkleidung, also die Innenschale des Heckrahmens, aus einem Mittelteil und zumindest zwei Seitenteilen zusammengesetzt ist. Die Stütze-Heckverkleidung ist somit erfindungsgemäß zumindest dreiteilig. Das Mittelteil ist als Schlossgegenstück für das Schloss der Heckklappe ausgebildet. Die mehrteilige Gestaltung der Stütze-Heckverkleidung ermöglicht es, dass im Bereich des Schlossgegenstückes der Heckrahmen lediglich aus dem Mittelteil und der Heckverkleidung zusammengesetzt ist. Es bedarf keiner Blechdopplungen und keiner anderen Verstärkungselemente, wie z.B. Schotte, innerhalb des Heckrahmens im Bereich des Schlossgegenstücks. Dadurch, dass erfindungsgemäß das separate Mittelteil vorgesehen ist, kann das Mittelteil, unabhängig von den beiden Seitenteilen, so ausgestaltet werden, dass es für die Funktion als Schlossgegenstück stabil genug ist. Ein weiterer Vorteil der mehrteiligen Stütze-Heckverkleidung ist, dass die Bauteile und somit auch die dazu nötigen Werkzeuge kleiner ausfallen. Das Mittelteil kann unabhängig von den Seitenteilen konstruiert und hergestellt werden. Dadurch ist es möglich, sowohl das Material, die Materialstärke als auch die Geometrie des Mittelteils entsprechend den Anforderungen für das Schlossgegenstück auszugestalten.

Bevorzugt ist vorgesehen, dass das Mittelteil aus einem dickeren Material, insbesondere einem Blech mit einer größerem Blechstärke, als die beiden Seitenteile, gebildet ist. Durch die erfindungsgemäße mehrteilige Gestaltung der Stütze-Heckverkleidung ist es möglich, nur im Mittelteil ein stärkeres Blech zu verwenden.

Des Weiteren ist bevorzugt vorgesehen, dass das Schlossgegenstück ein im Mittelteil ausgeformter Schließkeil ist. Dieser Schließkeil dient zum Einrasten des Schlosses der Heckklappe. Insbesondere der Schließteil wurde im Stand der Technik durch Blechdopplung verstärkt. Dies ist erfindungsgemäß nicht mehr notwendig, da das Mittelteil durch eine entsprechende Geometrie oder entsprechende Materialien unabhängig von den Seitenteilen konstruiert werden kann.

Für die Verbindung zwischen den Seitenteilen und dem Mittelteil gibt es zwei bevorzugte Varianten: Gemäß der ersten Variante kann das Mittelteil mit dem jeweiligen Seitenteil überlappen. Dadurch ist ein Verkleben und/oder Vernieten und/oder Verschweißen der beiden Teile möglich. Insbesondere erfolgt hier ein Punktschweißen. Gemäß der zweiten Variante können die Seitenteile mit dem Mittelteil auf Stoß verschweißt werden. Man spricht in diesem Zusammenhang auch von tailor welded blanks.

Besonders bevorzugt ist vorgesehen, dass zumindest eines der Seitenteile mit dem Mittelteil überlappt. Dadurch ist nämlich eine Einstellung der Gesamtlänge der Stütze-Heckverkleidung in y-Richtung (Fahrzeugquerrichtung) möglich. Diese Einstellbarkeit in y-Richtung ermöglicht eine sinnvolle Anbindung der Stütze-Heckverkleidung an ihren seitlichen Enden mit weiteren Bestandteilen der Fahrzeugkarosserie. Insbesondere werden die äußeren Enden der Seitenteile jeweils mit einem Längsträger und/oder einem Gepäckraum und/oder einer hinteren Säule (zum Beispiel C-Säule) der Fahrzeugkarosserie verbunden. Diese beidseitige feste Anbindung der Stütze-Heckverkleidung ist nur möglich, wenn die Gesamtlänge der Stütze-Heckverkleidung bei der Montage der Fahrzeugkarosserie variabel ist.

Das Mittelteil ist bevorzugt aus einem stärkeren Material als die Seitenteile gefertigt. Infolgedessen ist das Mittelteil tendenziell schwerer als die Seitenteile. Deshalb ist bevorzugt vorgesehen, dass das Mittelteil möglichst klein ausgebildet ist. In der Fahrzeugquerrichtung (y-Richtung) ist eine Mittelteillänge definiert. Die Mittelteillänge beträgt insbesondere maximal 50 cm, vorzugsweise maximal 40 cm, besonders vorzugsweise maximal 30 cm.

Die beiden Seitenteile und das Mittelteil werden vorzugsweise aus umgeformten Blechen hergestellt.

Die Erfindung umfasst des Weiteren ein Verfahren zur Herstellung der Fahrzeugkarosserie. Das Verfahren umfasst dabei die folgenden Schritte: Zunächst erfolgt ein Bereitstellen der Teile der Stütze-Heckverkleidung. Die Stütze-Heckverkleidung bildet eine Innenschale des Heckrahmens. Wie bereits beschrieben, umfasst die Stütze-Heckverkleidung ein Mittelteil und zumindest zwei Seitenteile. Eine Gesamtlänge der Stütze-Heckverkleidung ist in Fahrzeugquerrichtung (y-Richtung) definiert. Im nächsten Schritt erfolgt das Verbinden der beiden Seitenteile mit dem Mittelteil sowie das Verbinden der beiden Seitenteile mit weiteren Bestandteilen der Fahrzeugkarosserie. Diese weiteren Bestandteile der Fahrzeugkarosserie sind insbesondere Längsträger, ein Gepäckraum oder hintere Säulen (zum Beispiel C-Säule). Die Seitenteile werden also jeweils mit ihren inneren Enden am Mittelteil befestigt. Die äußerten Enden der Seitenteile werden mit den weiteren Bestandteilen der Fahrzeugkarosserie verbunden. Erfindungsgemäß erfolgt vor dem Verbinden zumindest des letzten Seitenteils mit dem Mittelteil eine Einstellung der Gesamtlänge der Stütze-Heckverkleidung. Dadurch ist es möglich, dass die Seitenteile spaltfrei oder mit gewünschtem Spaltmaß mit den weiteren Bestandteilen der Fahrzeugkarosserie fest verbunden werden können. Insbesondere ist vorgesehen, dass zumindest ein Seitenteile mit dem Mittelteil überlappt, so dass diese Einstellbarkeit der Gesamtlänge sinnvoll möglich ist.

Die im Rahmen der erfindungsgemäßen Fahrzeugkarosserie vorgestellten Ausgestaltungen und Unteransprüche finden entsprechend vorteilhafte Anwendung auf das erfindungsgemäße Verfahren.

Weitere Einzelheiten, Merkmale und Vorteile der Erfindung ergeben sich aus der nachfolgenden Beschreibung und den Figuren. Es zeigen:
- Figur 1: eine erfindungsgemäße Fahrzeugkarosserie gemäß einem Ausführungsbeispiel,
- Figur 2: eine erste Ansicht eines Heckrahmens der erfindungsgemäßen Fahrzeugkarosserie gemäß dem Ausführungsbeispiel,
- Figur 3: eine zweite Ansicht des Heckrahmens der erfindungsgemäßen Fahrzeugkarosserie gemäß dem Ausführungsbeispiel,
- Figur 4: die in Figur 2 gekennzeichnete Ansicht IV, und
- Figur 5: die in Figur 2 gekennzeichnete Ansicht V.

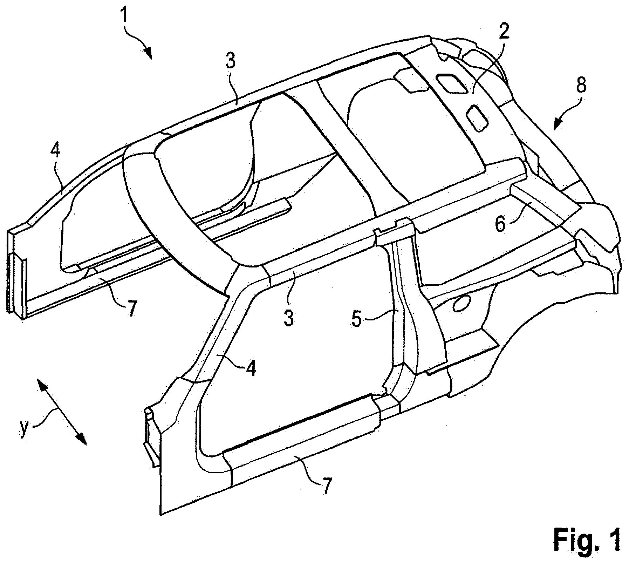

Im Folgenden wird anhand der Figuren 1 bis 5 ein Ausführungsbeispiel einer Fahrzeugkarosserie 1 beschrieben.

Die Fahrzeugkarosserie 1 umfasst zumindest einen Heckfensterrahmen 2, der zwei parallel verlaufende Dachrahmen 3 miteinander verbindet. Im unteren Bereich erstrecken sich parallel zwei Schweller 7. Die Schweller 7 sind über A-Säulen 4, B-Säulen 5 und C-Säulen 6 mit den Dachrahmen 3 verbunden. Im hinteren Bereich verläuft parallel zum Heckfensterrahmen 2 ein Heckrahmen 8. Eine nicht dargestellte Heckklappe würde den Bereich zwischen dem Heckfensterrahmen 2 und dem Heckrahmen 8 abschließen. Dementsprechend ist die Heckklappe über Scharniere am Heckfensterrahmen 2 befestigt. Ein Schloss in der Heckklappe rastet am Heckrahmen 8 ein.

Die eingezeichnete Fahrzeugquerrichtung y ist quer zur Fahrzeuglängsrichtung definiert. Der Heckrahmen 8 erstreckt sich in Fahrzeugquerrichtung y.

Die Fahrzeugkarosserie 1 ist in Blechschalenbauweise aufgebaut. Dies bedeutet, dass die einzelnen Komponenten, insbesondere der Heckfensterrahmen 2, die Dachrahmen 3, die Säulen 4, 5, 6, die Schweller 7 und der Heckrahmen 8 jeweils aus einer Außen- und Innenschale zusammengesetzt sind. Die Außen- und Innenschalen werden auch als Ober- und Unterschalten bezeichnet. Entscheidend für die Festigkeit ist, dass die Außen- und Innenschalen jeweils ein geschlossenes hohles Profil bilden.

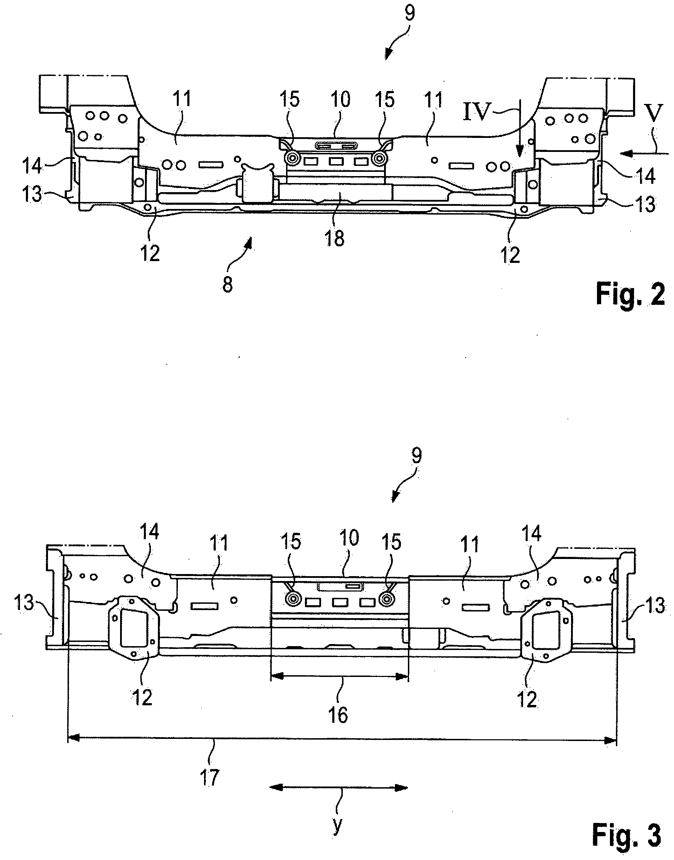

Fig. 2 zeigt den Heckrahmen 8 in einer Ansicht von vorne nach hinten. Der Heckrahmen 8 ist gebildet durch eine sogenannte Stütze-Heckverkleidung 9. Diese bildet die Innenschale. Die zugehörige Außenschale wird als Heckverkleidung 18 bezeichnet.

Die Stütze-Heckverkleidung 9 ist erfindungsgemäß mehrteilig aufgebaut. Die Stütze-Heckverkleidung 9 besteht im gezeigten Ausführungsbeispiel aus einem Mittelteil 10 und zwei Seitenteilen 11. Das Mittelteil 10 und die beiden Seitenteile 11 sind jeweils umgeformte Blechteile. Die beiden Seitenteile 11 überlappen mit dem Mittelteil 10 und sind im Überlappungsbereich mit dem Mittelteil 10 verschweißt.

Das Mittelteil 10 ist als Schlossgegenstück 15 ausgebildet. Hierzu ist insbesondere ein Schließkeil im Mittelteil 10 ausgeformt. In das Schlossgegenstück 15 kann ein Schloss einer Heckklappe einrasten.

Die dreiteilige Ausbildung der Stütze-Heckverkleidung 9 ermöglicht es, für das Mittelteil 10 ein entsprechendes Material, eine entsprechende Materialstärke und eine entsprechende Geometrie zu wählen, die für die Funktion als Schlossgegenstück 15 optimiert ist. Die Gestaltung des Mittelteils 10 ist dabei unabhängig von den Seitenteilen 11. Deshalb bedarf es am Mittelteil 10 keinerlei Blechverstärkung, Blechdopplungen, Verstärkungselemente oder Schotte. Allein das Mittelteil 10 in Kombination mit der Heckverkleidung 18 bildet in diesem Bereich den Heckrahmen 8, der stabil genug ist, um als Schlossgegenstück 15 zu funktionieren.

Figur 2 zeigt des Weiteren zwei Längsträger 12 und einen Gepäckraum 13 (insbesondere einen Gepäckraumboden). An den Außenseiten sind die Seitenteile 11 jeweils mit einem der Längsträger 12 und dem Gepäckraumboden 13 fest verbunden. Diese feste Anbindung mit diesen weiteren Bestandteilen der Fahrzeugkarosserie ist möglich, da die mehrteilige Gestaltung der Stütze-Heckverkleidung 9 eine variable Gesamtlänge 17 in Fahrzeugquerrichtung y ermöglicht.

Insbesondere ist dies in Figur 3 verdeutlicht. Figur 3 zeigt eine Ansicht des Heckrahmens 8 von hinten nach vorne gesehen. Die Heckverkleidung 18 ist dabei ausgeblendet. Gemäß Figur 3 erstreckt sich das Mittelteil 10 in Fahrzeugquerrichtung y über eine Mittelteillänge 16 Die gesamte Stütze-Heckverkleidung 9 erstreckt sich in Fahrzeugquerrichtung y über die Gesamtlänge 17.

Dadurch, dass die Seitenteile 11 mit dem Mittelteil 10 überlappen, ist eine Einstellung der Gesamtlänge 17 bei der Montage der Fahrzeugkarosserie 1 möglich. Die Mitteilteillänge 16 wird möglichst kurz ausgestaltet, um Gewicht einzusparen.

Figur 3 zeigt des Weiteren, dass im Bereich der Seitenteile 11 seitliche Schotte 14 zur Verstärkung des Heckrahmens 8 eingesetzt werden können. Allerdings bedarf es, wie bereits beschrieben, im Bereich des Mittelteils 10 keiner solchen Verstärkungen.

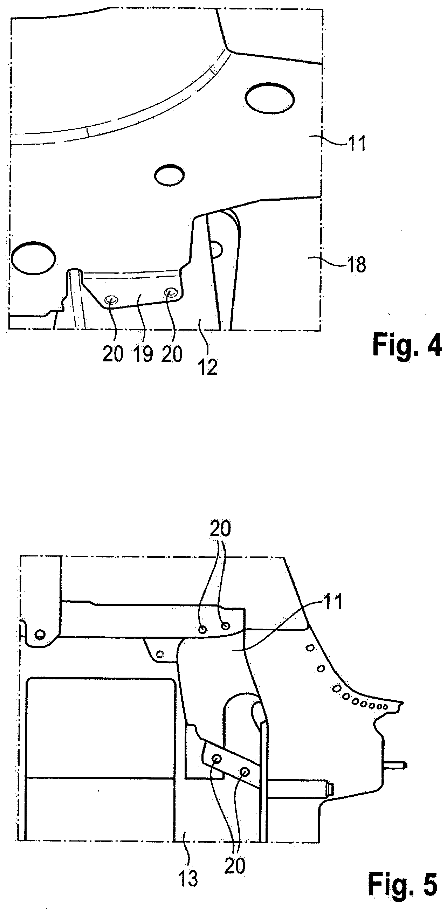

Figur 4 zeigt die mit IV in Figur 2 gekennzeichnete Ansicht. Anhand von Figur 4 ist gut zu sehen, wie das Seitenteil 11 über eine Lasche 19 mit dem entsprechenden Längsträger 12 fest verbunden ist. Die Lasche 19 ist hierzu über Schweißpunkte 20 fest mit dem Längsträger 12 verbunden.

Figur 5 zeigt die mit V gekennzeichnete Ansicht aus Figur 2. Figur 5 zeigt die Anbindung eines der Seitenteile 11 am Gepäckraum 13. Gut zu sehen ist in dieser Darstellung, dass das Seitenteil 11 als dreidimensionales Bauteil, also als Profil und nicht nur als flächiges Bauteil, bis zum Gepäckraum 13 geführt ist und über Schweißpunkte 20 mit dem Gepäckraum 13 verbunden ist. Diese Ausgestaltung der Seitenteile 11 und insbesondere die Verbindung mit dem Gepäckraum 13 und mit den Längsträgern 11 ist im Rahmen der Erfindung möglich, da die Gesamtlänge 17 der Stütze-Heckverkleidung 9 bei der Montage der Fahrzeugkarosserie 1 einstellbar ist.

Die mehrteilige Ausgestaltung der Stütze-Heckverkleidung 9 ermöglicht kleinere Bauteile und somit auch kleinere Werkzeuge. Dadurch ist ein Multitooling möglich und es ergibt sich zumindest eine doppelte Stückzahl pro Hub bei der Herstellung der Bauteile.

Der Blecheinsatz kann reduziert werden, da keine Blechdopplung, Verstärkungselemente oder Schotte im Bereich des Mittelteils 10 notwendig sind.

Die Einstellbarkeit in Fahrzeugquerrichtung y ermöglicht die Anbindung der Stütze-Heckverkleidung 9 zu den Längsträgern 12 im hinteren Bereich und/oder seitlich zum Gepäckraum 13.

Die mehrteilige Ausgestaltung der Stütze-Heckverkleidung 9 ermöglicht mehr Freiheitsgrade bei der Werkzeuggestaltung, insbesondere bezüglich Inhalten und geometrischen Ausprägungen. Gleichzeitig ermöglicht dies auch mehr Freiheitsgrade bei der Konstruktion der einzelnen Teile, so dass individueller auf die Funktion der Steifigkeit, beilspielsweise durch die Ausgestaltung der Blechdicke, Geometrie und Topologie, eingegangen werden kann. Die mehrteilige Ausbildung der Stütze-Heckverkleidung 9 ermöglicht ein hochflexibles Konzept, das auf verschiedenste Derivatsanforderungen, beispielsweise Split Door, Hatch, Limousine oder SUV, anpassbar ist.

### Bezugszeichenliste:

- 1: Fahrzeugkarosserie
- 2: Heckfensterrahmen
- 3: Dachrahmen
- 4: A-Säule
- 5: B-Säule
- 6: C-Säule (hintere Säule)
- 7: Schweller
- 8: Heckrahmen
- 9: Stütze-Heckverkleidung
- 10: Mittelteil
- 11: Seitenteil
- 12: Längsträger
- 13: Gepäckraum
- 14: Seitliche Schotte
- 15: Schlossgegenstück
- 16: Mittelteillänge
- 17: Gesamtlänge
- 18: Heckverkleidung
- 19: Lasche
- 20: Schweißpunkte

## Patentansprüche

1. Fahrzeugkarosserie (1) in Schalenbauweise,
umfassend einen sich in Fahrzeugquerrichtung (y) erstreckenden Heckrahmen (8) mit einer als Innenschale ausgebildeten Stütze-Heckverkleidung (9) und einer als Außenschale ausgebildeten Heckverkleidung (18),
**dadurch gekennzeichnet, dass** die Stütze-Heckverkleidung (9) zumindest dreiteilig ist und aus einem Mittelteil (10) und zumindest zwei Seitenteilen (11) zusammengesetzt ist,
wobei das separate Mittelteil (10) als Schlossgegenstück (15) für ein Schloss einer Heckklappe ausgebildet ist, und
wobei der Heckrahmen (8) im Bereich des Schlossgegenstücks (15) lediglich das Mittelteil (10) als Innenschale und die Heckverkleidung (9) als Außenschale, ohne Blechdopplung oder Verstärkungselemente, umfasst.

2. Fahrzeugkarosserie nach Anspruch 1, **dadurch gekennzeichnet, dass** das Mittelteil (10) aus einem dickeren Material als die beiden Seitenteile (11) gebildet ist.

3. Fahrzeugkarosserie nach einem der vorhergehenden Ansprüche, **dadurch gekennzeichnet, dass** das Schlossgegenstück (15) ein im Mittelteil (10) ausgeformter Schließkeil ist.

4. Fahrzeugkarosserie nach einem der vorhergehenden Ansprüche, **dadurch gekennzeichnet, dass** das Mittelteil (10) mit zumindest einem der Seitenteile (11) überlappt, wobei das Mittelteil (10) mit dem zumindest einen Seitenteil (11) verklebt und/oder vernietet und/oder verlötet und/oder verschweißt, insbesondere punktgeschweißt, ist.

5. Fahrzeugkarosserie nach einem der vorhergehenden Ansprüche, **dadurch gekennzeichnet, dass** das Mittelteil (10) mit zumindest einem der Seitenteile (11) auf Stoß verschweißt ist.

6. Fahrzeugkarosserie nach einem der vorhergehenden Ansprüche, **dadurch gekennzeichnet, dass** die beiden Seitenteile (11) jeweils mit einem Längsträger (12) und/oder einem Gepäckraum (13) und/oder einer hinteren Säule (6) der Fahrzeugkarosserie verbunden sind.

7. Fahrzeugkarosserie nach einem der vorhergehenden Ansprüche, **dadurch gekennzeichnet, dass** das Mittelteil (10) eine in Fahrzeugquerrichtung (y) definierte Mittelteillänge (16) aufweist, wobei die Mittelteillänge (16) maximal 50cm, vorzugsweise maximal 40cm, besonders vorzugsweise maximal 30cm, beträgt.

8. Fahrzeugkarosserie nach einem der vorhergehenden Ansprüche, **dadurch gekennzeichnet, dass** das Mittelteil (10) und die beiden Seitenteile (11) aus umgeformten Blechen hergestellt sind.

9. Verfahren zur Herstellung einer Fahrzeugkarosserie (1), umfassend die folgen Schritte:
- Bereitstellen einer Stütze-Heckverkleidung (9), die eine Innenschale eines Heckrahmens (8) bildet, wobei die Stütze-Heckverkleidung (9) aus einem Mittelteil (10) und zumindest zwei Seitenteilen (11) zusammengesetzt ist, und wobei eine Gesamtlänge (17) der Stütze-Heckverkleidung (9) in Fahrzeugquerrichtung (y) definiert ist, und
- Verbinden der beiden Seitenteile (11) mit dem Mittelteil (10) und Verbinden der beiden Seitenteile (11) mit weiteren Bestandteilen der Fahrzeugkarosserie, insbesondere mit Längsträgern (12) und/oder einem Gepäckraum (13) und/oder hinteren Säulen (6),
- wobei vor dem Verbinden zumindest eines Seitenteils (11) mit dem Mittelteil (10) eine Einstellung der Gesamtlänge (17) der Stütze-Heckverkleidung (9) erfolgt, so dass beide Seitenteile (11) spaltfrei oder mit gewünschtem Spaltmaß mit den weiteren Bestandteilen der Fahrzeugkarosserie verbunden werden können.

10. Verfahren nach Anspruch 9, **dadurch gekennzeichnet, dass** zumindest ein Seitenteil (11) mit dem Mittelteil (10) überlappt.

## Claims

1. A vehicle body (1) of shell construction,
comprising a rear frame (8) extending in the transverse direction of the vehicle (y) with a support-rear trim panel (9) formed as an inner shell and a rear trim panel (18) formed as an outer shell,
**characterised in that** the support-rear trim panel (9) is of at least three parts and is composed of a middle portion (10) and at least two side portions (11),
the separate middle portion (10) being formed as a lock counter-piece (15) for a lock of a tailgate, and
the rear frame (8) in the region of the lock counter-piece (15) comprising merely the middle portion (10) as inner shell and the rear trim panel (9) as outer shell, without any doubling-up of metal sheets and without any reinforcement elements.

2. A vehicle body according to Claim 1, **characterised in that** the middle portion (10) is formed from a thicker material than the two side portions (11).

3. A vehicle body according to one of the preceding claims, **characterised in that** the lock counter-piece (15) is a lock striker formed in the middle portion (10).

4. A vehicle body according to one of the preceding claims, **characterised in that** the middle portion (10) overlaps at least one of the side portions (11), the middle portion (10) being glued and/or riveted and/or soldered and/or welded, especially spot-welded, to the at least one side portion (11).

5. A vehicle body according to one of the preceding claims, **characterised in that** the middle portion (10) is butt-welded to at least one of the side portions (11).

6. A vehicle body according to one of the preceding claims, **characterised in that** the two side portions (11) are connected in each case to a side member (12) and/or a luggage compartment (13) and/or a rear pillar (6) of the vehicle body.

7. A vehicle body according to one of the preceding claims, **characterised in that** the middle portion (10) has a middle-portion length (16) which is defined in the transverse direction of the vehicle (y), the middle-portion length (16) being at most 50 cm, preferably at most 40 cm, especially preferably at most 30 cm.

8. A vehicle body according to one of the preceding claims, **characterised in that** the middle portion (10) and the two side portions (11) are produced from shaped metal sheets.

9. A method for producing a vehicle body (1), comprising the following steps:
- providing a support-rear trim panel (9) which forms an inner shell of a rear frame (8), wherein the support-rear trim panel (9) is composed of a middle portion (10) and at least two side portions (11), and wherein a total length (17) of the support-rear trim panel (9) is defined in the transverse direction of the vehicle (y), and
- connecting the two side portions (11) to the middle portion (10) and connecting the two side portions (11) to further components of the vehicle body, especially to side members (12) and/or a luggage compartment (13) and/or rear pillars (6),
- wherein prior to the connection of at least one side portion (11) to the middle portion (10) the total length (17) of the support-rear trim panel (9) is set, so that both side portions (11) can be connected to the further components of the vehicle body without gaps or with a desired gap dimension.

10. A method according to Claim 9, **characterised in that** at least one side portion (11) overlaps the middle portion (10).

## Revendications

1. Carrosserie de véhicule (1) réalisée sous la forme d'une coque, comprenant un cadre arrière (8) s'étendant dans la direction transversale (y) du véhicule ayant un habillage arrière de support (9) réalisé sous la forme d'une coque interne et un habillage arrière (18) réalisé sous la forme d'une coque externe,
**caractérisée en ce que**
l'habillage arrière de support (9) est en au moins trois parties et est constitué par l'assemblage d'une partie médiane (10) et d'au moins deux parties latérales (11),
la partie médiane séparée (10) étant réalisée sous la forme d'une pièce antagoniste de serrure (15) pour la serrure d'un capot arrière, et
le cadre arrière (8) comprenant, dans la zone de la pièce antagoniste de serrure (15) uniquement la pièce médiane (10) réalisée sous la forme d'une coque interne et l'habillage arrière (9) réalisé sous la forme d'une coque externe, sans doublage en tôle ou élément de renfort.

2. Carrosserie de véhicule conforme à la revendication 1,
**caractérisée en ce que**
la partie médiane (10) est réalisée en un matériau plus épais que les deux parties latérales (11).

3. Carrosserie de véhicule conforme à l'une des revendications précédentes,
**caractérisée en ce que**
la pièce antagoniste de serrure (15) est une clavette de verrouillage formée dans la partie médiane (10).

4. Carrosserie de véhicule conforme à l'une des revendications précédentes,
**caractérisée en ce que**
la partie médiane (10) se chevauche avec au mois l'une des parties latérales (11), la partie médiane (10) étant collée et/ou rivée et/ou brasée et/ou soudée, en particulier soudée, par points avec cette partie latérale (11).

5. Carrosserie de véhicule conforme à l'une des revendications précédentes,
**caractérisée en ce que**
la partie médiane (10) est soudée par électro-percution avec au moins l'une des parties latérales (11).

6. Carrosserie de véhicule conforme à l'une des revendications précédentes,
**caractérisée en ce que**
les deux parties latérales (11) sont respectivement reliées à un longeron (12) et/ou à un coffre à bagages (13) et/ou à une colonne arrière (6) de la carrosserie du véhicule.

7. Carrosserie de véhicule conforme à l'une des revendications précédentes,
**caractérisée en ce que**
la partie médiane (10) a une longueur (16) définie dans la direction transversale (y) du véhicule, la longueur (16) de la partie médiane étant au maximum égale à 50 cm, de préférence au maximum égale à 40 cm, et de façon particulièrement préférentielle au maximum égale à 30 cm.

8. Carrosserie de véhicule conforme à l'une des revendications précédentes,
**caractérisée en ce que**
la partie médiane (10) et les deux parties latérales (11) sont réalisées en des tôles déformées.

9. Procédé d'obtention d'une carrosserie de véhicule (1) comprenant les étapes suivantes consistant à :
- se procurer un habillage arrière de support (9) qui forme une coque arrière d'un cadre arrière (8), l'habillage arrière de support (9) étant constitué par l'assemblage d'une partie médiane (10) et d'au moins deux parties latérales (11), la longueur globale (17) de l'habillage arrière de support (9) dans la direction transversale (y) du véhicule étant définie, et
- relier les deux parties latérales (11) avec la partie médiane (10) et relier les deux parties latérales (11) avec d'autres composants de la carrosserie du véhicule, en particulier avec des longerons (12) et/ou le coffre à bagages (13) et/ou des colonnes arrière (6),
- avant la liaison, d'au moins l'une des parties latérales (11) avec la partie médiane (10) un réglage de la longueur globale (17) de l'habillage arrière de support (9) étant effectué de sorte que les deux parties latérales (11) puissent être reliées aux autres composants de la carrosserie du véhicule sans jeu ou avec un jeu souhaité.

10. Procédé conforme à la revendication 9,
**caractérisé en ce qu'**
au moins une partie latérale (11) se chevauche avec la partie médiane (10).
